# EUROPÄISCHE PATENTSCHRIFT

(11) **EP 4 089 376 B1**
(45) Veröffentlichungstag und Bekanntmachung des Hinweises auf die Patenterteilung: **30.10.2024**
(21) Anmeldenummer: 22183246.2
(22) Anmeldetag: 22.01.2019
(51) Int. Cl.: G01F 23/28, H01Q 13/02, H01Q 1/22

(54) **HOHLLEITER MIT HOHER LEITFÄHIGKEIT FÜR HOHE TEMPERATUREN UND HOHE FREQUENZEN FÜR FÜLLSTANDMESSGERÄTE**
WAVEGUIDE WITH HIGH CONDUCTIVITY FOR HIGH TEMPERATURES AND HIGH FREQUENCIES FOR FILL LEVEL METERS
CONDUCTEUR CREUX À CONDUCTIVITÉ ÉLEVÉE POUR TEMPÉRATURES ÉLEVÉES ET FRÉQUENCES ÉLEVÉES POUR APPAREILS DE MESURE DE NIVEAU DE REMPLISSAGE

(43) Veröffentlichungstag der Anmeldung: 16.11.2022
(62) Teilanmeldung aus: 19153117.7
(73) Patentinhaber: VEGA Grieshaber KG, 77709 Wolfach (DE)
(72) Erfinder: KIENZLE, Klaus, 77736 Zell am Harmersbach (DE); LENK, Fritz, 77761 Schiltach (DE); BAUR, Roland, 78126 Königsfeld (DE)
(74) Vertreter: Maiwald GmbH

(56) Entgegenhaltungen:
- DE-A1- 102016 123 223
- US-A1- 2009 212 996
- US-A1- 2017 141 474
- US-B2- 7 322 233
- US-B2- 9 110 165

## Beschreibung

### Gebiet der Erfindung

Die Erfindung betrifft eine Hohlleiteranordnung zur Übertragung von Mikrowellen, ein Verfahren zur Herstellung einer Hohlleiteranordnung und eine Verwendung.

### Hintergrund

Zur Füllstandmessung oder zur Grenzstandbestimmung werden Messgeräte eingesetzt, die ein Hochfrequenzfrontend verwenden, z.B. für die Messung eines Füllstands mittels Mikrowellen, insbesondere mittels Radarwellen. Für die Übertragung der Mikrowellen von einem Generator zu einem Antennensystem des Messgeräts können Hohlleiter verwendet werden. Weil zumindest einige dieser Messgeräte in Umgebungen mit hohen Temperaturen und/oder Temperaturschwankungen eingesetzt werden, ist es erforderlich, nicht nur einen Hohlleiter mit hoher Leitfähigkeit zur Verfügung zu stellen, sondern auch eine hohe Robustheit gegenüber hohen Temperaturen und/oder Temperaturschwankungen zu gewährleisten. Damit kann z.B. ein Radar-Antennensystem mit hoher Temperaturbeständigkeit aufgebaut werden, das über die Hohlleiteranordnung mit einem Hochfrequenzgenerator zur Erzeugung des Radarsignals gekoppelt ist. Dabei kann die Elektronik des Generators für einen wesentlich engeren Temperaturbereich spezifiziert sein, so dass die Hohlleiteranordnung unterschiedlichen Temperaturen bzw. Temperaturbereichen ausgesetzt sein kann. Bei einigen dieser Messgeräte werden, z.B. aus diesem Grund, lange Hohlleiter verwendet, deren Herstellung aufgrund der Länge problematisch sein kann.

Die Druckschrift US 2009 212 996 A1 betrifft eine Vorrichtung zur Überwachung des Füllstands eines Mediums in einem Behälter.

Die Druckschrift US 7,322,233 B2 betrifft eine Füllstands-Messvorrichtung mit einem Wellenleiter und einem Wellenanpasser.

Die Druckschrift DE 1020 16 123 223 A1 offenbart einen Modenkonverter für ein Radarmessgerät. Die Druckschrift US 2017 141 474 A1 offenbart eine Hornantenne für ein Radarmessgerät.

Die Druckschrift US 9 110 165 B2 offenbart eine thermische Trennung für ein Radarmessgerät.

### Zusammenfassung der Erfindung

Es ist eine Aufgabe der Erfindung, eine Hohlleiteranordnung zur Verfügung zu stellen, welche eine hohe Leitfähigkeit für Mikrowellen bei einer hohen Temperaturfestigkeit aufweist.

Diese Aufgabe wird durch den Gegenstand der unabhängigen Patentansprüche gelöst. Weiterbildungen der Erfindung ergeben sich aus den Unteransprüchen und der folgenden Beschreibung.

Ein erster Aspekt der Erfindung betrifft eine Hohlleiteranordnung zur Übertragung von Mikrowellen. Die Hohlleiteranordnung weist ein Hohlleiterrohr mit einem rechteckigen oder elliptischen inneren Hohlraum und einer Außenwand auf. Weiterhin weist die Hohlleiteranordnung einen Mantel auf, dessen Innenwand mit der Form der Außenwand des Hohlleiterrohrs zumindest abschnittsweise korrespondiert und der das Hohlleiterrohr zumindest abschnittsweise aufnimmt.

Die Hohlleiteranordnung ist zur Übertragung von Mikrowellen eingerichtet, z.B. in einem Frequenzbereich zwischen 1 und 300 GHz, beispielsweise zwischen 30 und 100 GHz. Das Hohlleiterrohr ist dabei so ausgestaltet, dass es auf den zu übertragenden Frequenzbereich angepasst und/oder optimiert ist. Ein innerer Bereich des Hohlleiterrohrs, den inneren Hohlraum, innerhalb dessen die Mikrowellen übertragen werden, ist dabei mit einer hohen Genauigkeit geformt, insbesondere bezüglich der Glattheit seiner Innenwand und/oder den mechanischen Abmessungen. Die Innenwand kann bei manchen Hohlleiterrohren eine besondere Behandlung und/oder eine spezielle Vergütung und/oder Beschichtung aufweisen. Die Form der Innenwand kann rechteckig oder elliptisch sein; dies schließt auch z.B. eine quadratische oder eine runde Form ein. Für besondere Ausgestaltungen des Hohlleiterrohrs - die sich z.B. aus spezifischen Optimierungen und/oder Simulationen ergeben können - kann es vorteilhaft sein, eine Abwandlung der rechteckigen Form, z.B. durch starke Abrundung von Ecken und/oder eine Abwandlung in ein Vieleck, vorzunehmen. Das Hohlleiterrohr kann aus einem Werkstoff bestehen, der eine hohe Leitfähigkeit aufweist. Der Werkstoff des Hohlleiterrohrs kann dabei eine hohe Homogenität aufweisen.

Die Außenwand des Hohlleiterrohrs kann einen ähnlichen Querschnitt wie die Innenwand des Mantels aufweisen. Ein wichtiges Kriterium für die Form bzw. den Querschnitt der Außenwand kann sein, dass diese mit der Form bzw. dem Querschnitt der Innenwand des Mantels vorteilhaft korrespondiert. Kriterien dafür können z.B. eine besonders einfache, kostengünstige und/oder genaue Verarbeitung des Hohlleiterrohrs und/oder des Mantels sein. Wenn also beispielsweise der Mantel besonders einfach und kostengünstig mit einem quadratischen Innenquerschnitt hergestellt werden kann, dann kann es für die Hohlleiteranordnung vorteilhaft sein, ein Hohlleiterrohr mit einem quadratischen Außenquerschnitt zu verwenden. Bei der Hohlleiteranordnung korrespondiert die Innenwand des Mantels zumindest abschnittsweise mit der Form der Außenwand des Hohlleiterrohrs. Dabei nimmt der Mantel das Hohlleiterrohr zumindest abschnittsweise auf. In diesen Abschnitten, in denen der Mantel das Hohlleiterrohr aufnimmt, ist ein Abstand zwischen der Innenwand des Mantels und der Außenwand des Hohlleiterrohrs sehr gering. In einigen Ausführungsformen beträgt der Abstand weniger als 100 µm, insbesondere weniger als 10 µm, beispielsweise weniger als 1 µm. In einer Ausführungsform ist der Abstand im Wesentlichen Null.

In einer Ausführungsform unterscheidet sich das Material des Mantels von dem Material des Hohlleiterrohrs. Dadurch ist es vorteilhafterweise möglich, das Material - und andere Merkmale - unter einer Reihe von Aspekten optimal auszuwählen. Beispielsweise für diese Aspekte können Leitfähigkeit, Kosten, Robustheit, Verarbeitbarkeit und/oder weitere sein. Insbesondere kann sich ein optimales Material des Mantels von einem optimalen Material des Hohlleiterrohrs unterscheiden. Während z.B. hohe Leitfähigkeit eine wichtige Eigenschaft des Hohlleiterrohrs sein kann, aber dessen Robustheit einen geringeren Stellenwert haben kann, können die Anforderungen für den Mantel invers dazu liegen. Dadurch kann die Hohlleiteranordnung kostengünstig mit optimierten Eigenschaften hergestellt werden. Beispielsweise kann das Hohlleiterrohr mit üblichen Techniken hochgenau mit rechteckigem oder elliptischen Innenquerschnitt für die Frequenz passend hergestellt werden und dann, mittels einer dafür optimierten Fügetechnik, in einem schützenden Mantel angeordnet werden. Damit kann sich einerseits eine hervorragende Leitfähigkeit der Hohlleiteranordnung ergeben und zugleich eine hohe Robustheit, z.B. gegenüber mechanischen, chemischen und/oder thermischen Belastungen. Weiterhin ist es aufgrund des schützenden Mantels möglich, ein dünnwandiges Hohlleiterrohr zu verwenden; dies kann vorteilhaft sein, z.B. bezüglich Gewicht und/oder Kosten der Hohlleiteranordnung.

Dabei ist es vorteilhaft, wenn die Materialien des Mantels und des Hohlleiterrohrs verträglich sind. Die Verträglichkeit kann sich z.B. auf deren Position in der sog. elektrochemischen Spannungsreihe beziehen, auf deren thermischen Ausdehnungskoeffizienten und/oder auf weitere Aspekte bzw. Kriterien; bezüglich dieser Kriterien können die Materialien ähnlich sein, um so die Verträglichkeit zu erreichen.

In einer Ausführungsform weist die Außenwand des Hohlleiterrohrs einen rechteckigen oder elliptischen Außenquerschnitt auf. Dies kann z.B. einen runden oder quadratischen Außenquerschnitt umfassen. Dies kann in Fall von eckigen Außenquerschnitten eine Abrundung der Kanten umfassen. Natürlich korrespondiert auch bei dieser Ausführungsform die Außenwand des Hohlleiterrohrs mit der Innenwand des Mantels.

In einer Ausführungsform weist die Außenwand des Hohlleiterrohrs einen runden Außenquerschnitt auf. Dies kann insbesondere vorteilhaft sein, wenn die korrespondierende Innenwand des Mantels besonders genau und/oder kostengünstig als runde Innenwand hergestellt werden kann. In diesem Fall kann ein runder Außenquerschnitt des Hohlleiterrohrs die Fixierung und Positionierung in dem schützenden Mantel erleichtern.

In einer Ausführungsform weist das Hohlleiterrohr eine elektrische Leitfähigkeit von höher als 20 m/Ohm mm², insbesondere von höher als 50 m/Ohm mm², auf. Dabei weist der Mantel einen ähnlichen thermischen Ausdehnungskoeffizienten wie das Hohlleiterrohr auf, wobei sich die Ausdehnungskoeffizienten des Mantels und des Hohlleiterrohrs insbesondere um weniger als 3 %, beispielsweise um weniger als 1,5 %, unterscheiden. Damit können in einem weiten Temperaturbereich thermische Spannungen zwischen Mantel und Hohlleiterrohr geringgehalten oder gar vermieden werden. Auch können dadurch mechanische Probleme bei der Montage geringgehalten werden.

In einer Ausführungsform weist das Hohlleiterrohr Kupfer, eine Kupferlegierung, Messing, Silber und/oder Gold auf oder besteht aus zumindest einem dieser Materialien. Dabei weist der Mantel Stahl, Edelstahl, Keramik, Kunststoff oder Kunststoff mit Kohlefaser auf oder besteht aus zumindest einem dieser Materialien. Dabei können unterschiedliche Kombinationen dieser Materialen vorteilhaft sein. Beispielsweise ist eine Kombination von Edelstahl als Material des Mantels und Kupfer als Material des Hohlleiterrohrs vorteilhaft, weil Kupfer eine sehr gute elektrische Leitfähigkeit aufweist, bei einem thermischen Ausdehnungskoeffizienten von 16,5 · 10⁻⁶ / K, und wobei der thermische Ausdehnungskoeffizient von Edelstahl 16,0 · 10⁻⁶ / K beträgt.

In einer Ausführungsform ist die Innenwand des Hohlleiterrohrs mit Messing und/oder einem Material mit einer hohen elektrischen Leitfähigkeit beschichtet ist bzw. aus poliertem Messing und/oder einem poliertem Material mit einer hohen elektrischen Leitfähigkeit gefertigt ist. Dies kann zu einer weiteren Verbesserung der Leitfähigkeit der Hohlleiteranordnung beitragen.

In einer Ausführungsform ist die Innenseite des Mantels und/oder die Außenwand des Hohlleiterrohrs beschichtet und/oder vergütet. Die Beschichtung kann einen Kunststoff, einen Lack und/oder Schmiermittel wie Graphit und/oder Öl umfassen. Die Vergütung kann ein Eloxieren, Brünieren, etc. umfassen. Die Beschichtung bzw. Vergütung kann zu einer weiteren Reduktion der thermischen Spannung zwischen Mantel und Hohlleiterrohr beitragen.

In einer Ausführungsform weist die Innenseite des Mantels im Bereich eines Endes des Mantels eine Aufweitung auf, insbesondere eine konische Aufweitung, welche zum Einpressen und Fixieren des Hohlleiterrohrs bei der Montage der Hohlleiteranordnung eingerichtet ist. Die zylindrische oder konische Aufweitung kann bei einem rechteckigen Hohlleiterrohr entsprechend keilförmig ausgestaltet sein. Diese Ausgestaltung kann die Montage der Hohlleiteranordnung erleichtern.

In einer Ausführungsform ist das Hohlleiterrohr in dem Mantel mittels eines konischen Rings fixiert. Der Ring kann insbesondere geschlitzt ausgeführt sein. Der Ring kann als ein Montageelement mit ringförmiger Innenbohrung oder Aufnahmebohrung und konischer Außenringform zur Aufnahme des Hohlleiterrohrs verwendet werden. Das Montageelement bzw. der Ring ist dazu eingerichtet, in die konische Aufweitung an der Innenseite des Mantels einzugreifen und auf diese Weise das Hohlleiterrohr in dem Mantel zu verpressen und auf diese Weise zu fixieren.

Ein weiterer Aspekt der Erfindung betrifft ein Verfahren zur Herstellung einer Hohlleiteranordnung wie oben oder im Folgenden beschrieben, mit den Schritten:
- Bereitstellen eines Mantels, welcher eine Innenwand zur Aufnahme eines Hohlleiterrohrs aufweist. Das Bereitstellen des Mantels kann beispielsweise eine nahtlose Fertigung des Hohlleiterrohrs, ein Bohren, ein Fräsen, eine sonstige abtragende Bearbeitung, ein Beschichten und/oder ein Vergüten beinhalten. Es ist auch möglich, den Mantel nur im Bereich der Enden so genau zu bearbeiten, so dass er dazu geeignet ist, das Hohlleiterrohr einzufügen. Dies kann die Bearbeitung besonders kostengünstig halten.
- Anordnen des Hohlleiterrohrs in dem Mantel, mittels einer der folgenden Methoden: Kleben, Pressen, Schrumpfen, Löten, Schweißen, Klemmen und/oder Schrauben. Damit wird das Hohlleiterrohr in dem Mantel fixiert. Dabei korrespondiert bei der Hohlleiteranordnung die Innenwand des Mantels zumindest abschnittsweise mit der Form der Außenwand des Hohlleiterrohrs. Dabei nimmt der Mantel das Hohlleiterrohr zumindest abschnittsweise auf. In diesen Abschnitten ist ein Abstand zwischen der Innenwand des Mantels und der Außenwand des Hohlleiterrohrs sehr gering.

In einer Ausführungsform weist das Verfahren einen weiteren Schritt auf:
- Anordnen eines konischen, insbesondere geschlitzten, Rings zwischen dem Mantel und dem Hohlleiterrohr. Damit wird der Mantel und das Hohlleiterrohr auf einfache und wirksame Weise fixiert. Der Ring kann als selbstsperrender Sicherungsring ausgeführt sein.

Anschließend kann der Ring an einer Außenseite abgeschlossen werden, z.B. mit einem Kunststoff, so dass dadurch der Bereich zwischen dem Mantel und dem Hohlleiterrohr hermetisch geschlossen ist. Dadurch kann die Korrosionsfestigkeit der Hohlleiteranordnung weiter verbessert werden.

In einer Ausführungsform weist das Verfahren weiterhin folgende Schritte auf:
- Schneiden eines Endes eines ersten Hohlleiterrohrs und eines Endes eines zweiten Hohlleiterrohrs in einem vordefinierten spitzen Winkel, wobei das Ende des ersten Hohlleiterrohrs und das Ende des zweiten Hohlleiterrohrs denselben Winkel aufweisen;
- Aneinanderfügen des Endes des ersten Hohlleiterrohrs und des Endes des zweiten Hohlleiterrohrs in einem Z-Winkel, wobei das erste Hohlleiterrohr und das zweite Hohlleiterrohr in dem Mantel angeordnet werden.

Um die Hohlleiteranordnung zu verlängern, kann die Verwendung von mehr als einem Hohlleiterrohr erforderlich sein. Der Übergang zwischen zwei Hohlleiterrohren ist aber in vielen Fällen nicht völlig glatt und kann dadurch eine Störstelle für die Mikrowellen bilden. Experimente zeigen, dass die Störung durch die Störstelle jedoch deutlich reduziert werden kann, wenn die Hohlleiterrohre nicht in einem 90°-Winkel, sondern in einem spitzen Winkel abgeschnitten und so zusammengefügt werden. Der spitze Winkel kann zwischen 30° und 60°, z.B. etwa 50°, betragen.

Ein weiterer Aspekt der Erfindung betrifft ein Messgerät zur Füllstandmessung oder zur Grenzstandbestimmung. Das Messgerät weist dabei auf:
- einen Generator, der zur Erzeugung von hochfrequenten Messsignalen im Mikrowellen-Bereich eingerichtet ist,
- ein Antennensystem, das zum Abstrahlen der hochfrequenten Messsignale eingerichtet ist, und
- eine Hohlleiteranordnung wie oben und/oder im Folgenden beschrieben, eingerichtet zum Übertragen der Messsignale von dem Generator zu dem Antennensystem.

Das Messgerät weist eine Elektronik auf, welche einen Generator zur Erzeugung von hochfrequenten Messsignalen oder Mikrowellen umfasst. Das Antennensystem sendet die Messsignale in Richtung eines Mediums oder Füllguts aus und empfängt die reflektierten Signale. Das Antennensystem kann ein Befestigungselement zur Montage, z.B. auf einem Behälter, aufweisen und ein Abstrahlelement bzw. ein Sende-/Empfangselement, das die Messsignale aussendet und empfängt. Die empfangenen Messsignale können z.B. von der Elektronik ausgewertet werden und einen Füllstand und/oder einen Grenzstand des Mediums bestimmen und/oder anzeigen. Das Befestigungselement zur Montage und das Abstrahlelement können dicht miteinander verbunden sein und aus chemisch beständigem Material hergestellt sein. Um eine ausreichende Signalübertragung von und zur Antenne zu erreichen, können Elektronik und Antennensystem nahe aneinander angeordnet sein. Die Elektronik kann temperaturempfindlicher sein als das Antennensystem. Beispielsweise kann die Elektronik mit einer Maximaltemperatur von z.B. 100 °C, 80 °C oder 70 °C spezifiziert sein. Das Antennensystem kann aus Werkstoffen bestehen, die für höhere Temperaturen ausgelegt sind. Daher können Elektronik und Antennensystem räumlich getrennt sein und können mittels der Hohlleiteranordnung verbunden sein. Dies erfordert eine entsprechende thermische Auslegung der Hohlleiteranordnung, welche durch die beschriebene Hohlleiteranordnung erzielt wird.

Ein weiterer Aspekt der Erfindung betrifft eine Verwendung einer Hohlleiteranordnung wie oben oder im Folgenden beschrieben oder eines Verfahrens wie oben oder im Folgenden beschrieben zur Übertragung von Mikrowellen zum Messen eines Grenzstands oder eines Füllstands.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Es zeigt:
- **Fig. 1**: eine schematische Skizze eines Messgeräts gemäß einer Ausführungsform;
- **Fig. 2a**: eine schematische Skizze eines Messgeräts gemäß einer weiteren Ausführungsform;
- **Fig. 2b** und **2c**: Details von **Fig. 2**;
- **Fig. 3a**: eine schematische Skizze eines Messgeräts gemäß einer weiteren Ausführungsform;
- **Fig. 3b** und **3c**: Details von **Fig. 3**;
- **Fig. 4a**: eine schematische Skizze eines Querschnitts einer Hohlleiteranordnung gemäß einer weiteren Ausführungsform in perspektivischer Ansicht;
- **Fig. 4b**: eine schematische Skizze einer Hohlleiteranordnung gemäß einer weiteren Ausführungsform im Längsschnitt;
- **Fig. 4c**: eine schematische Skizze einer Hohlleiteranordnung gemäß einer weiteren Ausführungsform im Längsschnitt;
- **Fig. 5a**: eine schematische Skizze einer Hohlleiteranordnung gemäß einer weiteren Ausführungsform;
- **Fig. 5b** bis **5e**: schematische Skizzen eines Hohlleiterrohrs gemäß weiteren Ausführungsformen;
- **Fig. 6**: ein Verfahren gemäß einer Ausführungsform.

### Detaillierte Beschreibung von Ausführungsformen

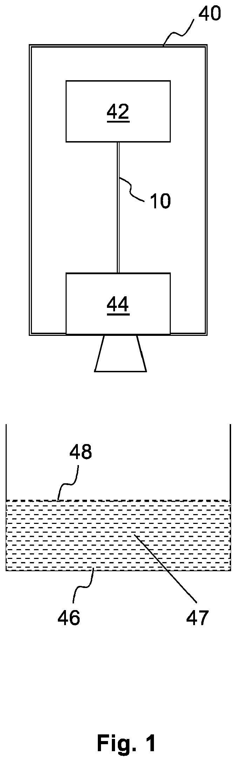

**Fig. 1** zeigt eine schematische Skizze eines Messgeräts 40 zur Füllstandmessung oder zur Grenzstandbestimmung gemäß einer Ausführungsform. Das Messgerät 40 weist eine Elektronik auf, welche einen Generator 42 umfasst. Der Generator 42 ist zur Erzeugung von hochfrequenten Messsignalen im Mikrowellen-Bereich eingerichtet. Der Generator 42 erzeugt hochfrequente Messsignale, insbesondere Mikrowellen, z.B. in einem Frequenzbereich zwischen 1 und 300 GHz, beispielsweise zwischen 30 und 100 GHz. Das Messgerät 40 weist weiterhin ein Antennensystem 44 auf, das zum Abstrahlen der hochfrequenten Messsignale und zum Empfangen von reflektierten Messsignalen eingerichtet ist. Der Generator 42 und das Antennensystem 44 sind mittels einer Hohlleiteranordnung 10 verbunden. Die Verbindung ist bidirektional. Das Antennensystem 44 ist in diesem Ausführungsbeispiel oberhalb eines Behälters 46 angeordnet, der teilweise mit einem Füllgut 47 gefüllt ist. Das Antennensystem 44 ist dazu eingerichtet, mittels der von dem Generator 42 erzeugten Messsignale einen Füllstand und/oder einen Grenzstand einer Füllgutoberfläche 48 zu bestimmen. Dies geschieht, indem von dem Generator 42 hochfrequente Messsignale erzeugt, über die Hohlleiteranordnung 10 zu dem Antennensystem 44 weitergeleitet und mittels des Antennensystems 44 abgestrahlt werden. Die Messsignale werden von der Füllgutoberfläche 48 reflektiert, von dem Antennensystem 44 empfangen und über die Hohlleiteranordnung 10 an die Elektronik übertragen. Die Elektronik wertet dann die reflektierten Messsignale aus.

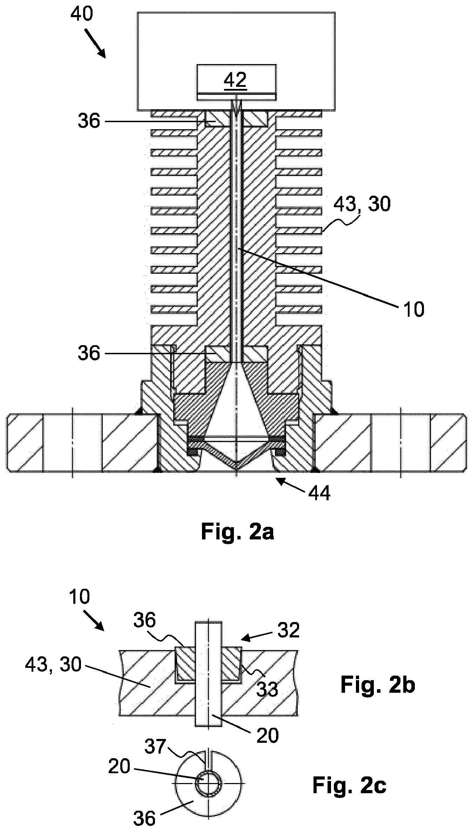

**Fig. 2a** zeigt eine schematische Skizze eines Messgeräts 40 gemäß einer weiteren Ausführungsform. Die Funktionalität ist dieselbe wie bei **Fig. 1** beschrieben. Auch bei diesem Ausführungsbeispiel ist in einem unteren Bereich des Messgeräts 40 ein Antennensystem 44 angeordnet. Das Antennensystem 44 ist mittels einer Hohlleiteranordnung 10 mit einer Elektronik mit einem Generator 42 verbunden. Die Hohlleiteranordnung 10 weist an beiden Enden ein Befestigungselement 36 in Form eines konischen Rings auf. Die Hohlleiteranordnung 10 ist mit einer Temperaturentkopplung 43 umgeben. Die Temperaturentkopplung 43 kann mit einem Mantel 30 der Hohlleiteranordnung 10 verbunden sein oder, zumindest teilweise, den Mantel 30 bilden. Die Temperaturentkopplung 43 kann, wie abgebildet, Kühlrippen aufweisen. Die Temperaturentkopplung 43 trennt das Antennensystem 44, das für eine höhere Temperatur als die Elektronik ausgelegt ist, thermisch von der Elektronik mit dem Generator 42.

**Fig. 2b** zeigt, als Detail von **Fig. 2****,** den konischen Ring 36, der - in diesem Ausführungsbeispiel - als Befestigungselement zwischen der Temperaturentkopplung 43 (die auch als Mantel 30 fungiert) und dem Hohlleiterrohr 20 der Hohlleiteranordnung 10 angeordnet ist. Es ist deutlich sichtbar, wie hierbei ein Endebereich 32 des Mantels 30 mit dem Hohlleiterrohr 20 verklemmt ist und auf diese Weise das Hohlleiterrohr 20 fixiert.

**Fig. 2c** zeigt ein weiteres Detail von **Fig. 2****,** nämlich eine Draufsicht des konischen Rings 36, welcher um das Hohlleiterrohr 20 angeordnet ist. Dabei wird insbesondere die Lage eines Schlitzes 37 in dem Ring 36 sichtbar.

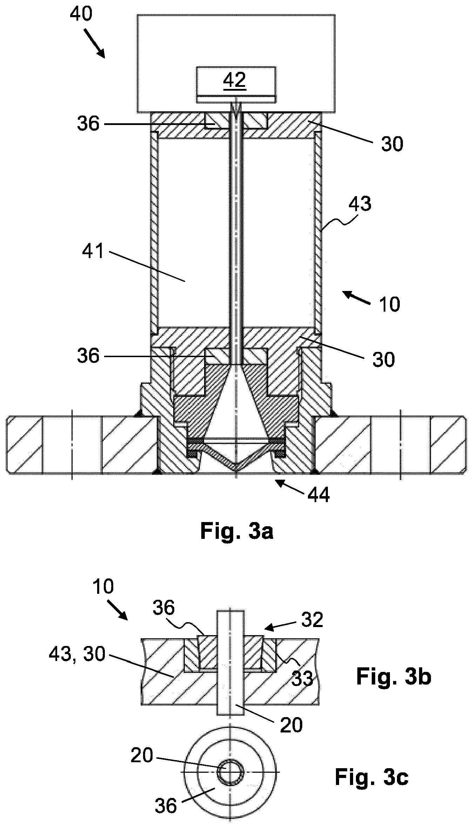

**Fig. 3a** zeigt eine schematische Skizze eines Messgeräts 40 gemäß einer weiteren Ausführungsform. Auch hier ist die Funktionalität dieselbe wie bei **Fig. 1** beschrieben. Auch diesem Ausführungsbeispiel ist in einem unteren Bereich des Messgeräts 40 ein Antennensystem 44 angeordnet. Das Antennensystem 44 ist mittels einer Hohlleiteranordnung 10 mit einer Elektronik mit einem Generator 42 verbunden. Die Hohlleiteranordnung 10 ist mit einer Temperaturentkopplung 43 umgeben. Die Temperaturentkopplung 43 kann, wie abgebildet, von der Hohlleiteranordnung 10 beabstandet sein, z.B. mittels eines Hohlraums 41. Der Hohlraum 41 kann beispielsweise mit Luft und/oder einem anderen Fluid, z.B. ein Schutzgas oder Transformatorenöl, gefüllt sein. Die Temperaturentkopplung 43 und der Hohlraum 41 trennen das Antennensystem 44 thermisch von der Elektronik mit dem Generator 42.

**Fig. 3b** zeigt, als Detail von **Fig. 3****,** ein weiteres Ausführungsbeispiel des konischen Rings 36, der zwischen dem Mantel 30 und dem Hohlleiterrohr 20 der Hohlleiteranordnung 10 angeordnet ist. Dabei ist das Hohlleiterrohr 20 abschnittsweise in dem Mantel 30 angeordnet. Es ist deutlich sichtbar, wie mittels eines Rings 36 ein Endebereich 32 des Mantels 30 mit dem Hohlleiterrohr 20 verklemmt ist und auf diese Weise das Hohlleiterrohr 20 fixiert. Dieser Ring 36 ist in einem weiteren ringartigen Gebilde verklemmt; das ringartige Gebilde ist ein Teil des Mantels 30.

**Fig. 3c** zeigt ein weiteres Detail von **Fig. 3****,** nämlich eine Draufsicht des Ausführungsbeispiels des konischen Rings 36 von **Fig. 3b****,** welcher um das Hohlleiterrohr 20 angeordnet ist. Dieser Ring 36 weist keinen Schlitz auf. Dieser Ring 36 ist in einem weiteren ringartigen Gebilde verklemmt; das ringartige Gebilde ist ein Teil des Mantels 30.

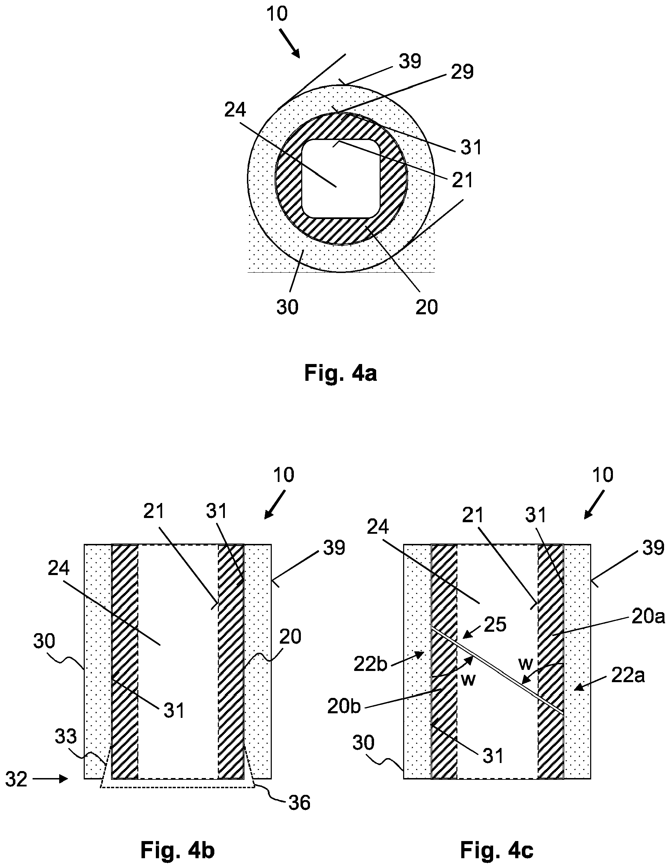

**Fig. 4a** zeigt eine schematische Skizze eines Querschnitts einer Hohlleiteranordnung 10 gemäß einer weiteren Ausführungsform in perspektivischer Ansicht. Dabei ist ein Hohlleiterrohr 20 von einem Mantel 30 umgeben. Das Hohlleiterrohr 20 weist einen abgerundeten rechteckigen inneren Hohlraum 24 mit einer Innenwand 21 auf. Die Innenwand 21 des Hohlleiterrohrs 20 kann besonders aufwändig bearbeitet sein, z.B. besonders glatt ausgeführt, vergütet und/oder mit Messing beschichtet sein. Eine Außenwand 29 des Hohlleiterrohrs 20 korrespondiert zumindest abschnittsweise mit der Form einer Innenwand 31 des Mantels 30. In diesem Ausführungsbeispiel weist die Außenwand 29 des Hohlleiterrohrs 20 einen runden Außenquerschnitt auf, und daher weist die Innenwand 31 des Mantels 30 einen runden Innenquerschnitt auf. Ein Abstand zwischen der Innenwand 31 des Mantels 30 und der Außenwand 29 des Hohlleiterrohrs 20 kann dabei weniger als 100 µm, insbesondere weniger als 10 µm, betragen. Das Material des Mantels 30 unterscheidet sich von dem Material des Hohlleiterrohrs 20. Dies kann auch zu unterschiedlichen Eigenschaften von Mantel 30 und Hohlleiterrohr 20 führen. So kann das Hohlleiterrohr 20 beispielsweise eine hohe elektrische Leitfähigkeit aufweisen, der schützende Mantel 30 kann aber eine geringe elektrische Leitfähigkeit aufweisen, zumindest im Vergleich mit der Leitfähigkeit des Hohlleiterrohrs 20. Andere Eigenschaften des Mantels 30 und des Hohlleiterrohrs 20 können aber ähnlich sein; beispielsweise kann der Mantel 30 einen ähnlichen thermischen Ausdehnungskoeffizienten aufweisen wie das Hohlleiterrohr 20. So kann z.B. das Hohlleiterrohr 20 aus Kupfer bestehen oder Kupfer aufweisen, und der Mantel 30 kann aus Edelstahl bestehen oder Edelstahl aufweisen. Eine Außenwand 39 des Mantels 30 weist eine runde Form auf. Die Außenwand 39 kann aber auch eine andere Form aufweisen, insbesondere eine andere Form als die Innenwand 31 des Mantels 30.

**Fig. 4b** zeigt eine schematische Skizze einer Hohlleiteranordnung 10 gemäß einer Ausführungsform im Längsschnitt. Dabei bezeichnen die gleichen Bezugszeichen wie in **Fig. 4a** die gleichen Komponenten. Dieses Ausführungsbeispiel weist in einem Endebereich 32 des Mantels 30 zusätzlich eine konische Aufweitung 33 auf, in die ein Befestigungselement 36 in Form eines konischen Rings eingefügt ist, um das Hohlleiterrohr 20 in dem Mantel 30 zu fixieren.

**Fig. 4c** zeigt eine schematische Skizze einer Hohlleiteranordnung 10 gemäß einer Ausführungsform im Längsschnitt. Dabei bezeichnen die gleichen Bezugszeichen wie in **Fig. 4a** die gleichen Komponenten. In diesem Ausführungsbeispiel ist eine Fügestelle 25 gezeigt, an der ein Ende 22a eines ersten Hohlleiterrohrs 20a an ein Ende 22b eines zweiten Hohlleiterrohrs 20b gefügt wird. Dabei ist deutlich zu sehen, dass die Enden 22a und 22b in einem spitzen Winkel w abgeschnitten wurden. Dabei sind die Winkel w der Enden 22a und 22b gleich. Die Enden 22a und 22b werden dann mit einem Z-Winkel w aneinandergefügt. Die Verwendung eines spitzen Winkels w kann vorteilhafterweise dazu führen, dass die Störung der Mikrowellen an der Fügestelle 25 geringer ausfällt als bei einem geraden Schnitt (w=90°).

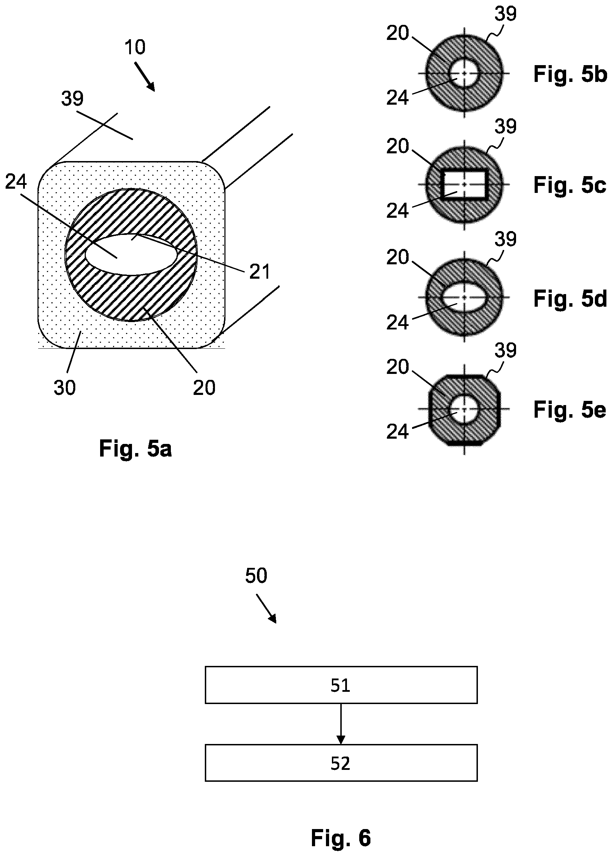

**Fig. 5a** zeigt eine schematische Skizze einer Hohlleiteranordnung 10 gemäß einer weiteren Ausführungsform. Dabei bezeichnen die gleichen Bezugszeichen wie in **Fig. 4a** die gleichen Komponenten. Diese Ausführungsform unterscheidet sich von der Ausführungsform der **Fig. 4a** durch die Form der Außenwand 39 des Mantels 30 und durch die Form des inneren Hohlraums 24 bzw. der Innenwand 21 des Hohlleiterrohrs 20. In diesem Ausführungsbeispiel ist die Außenwand 39 des Mantels 30 rechteckig mit Abrundungen ausgestaltet. Die Innenwand 21 des Hohlleiterrohrs 20 ist elliptisch ausgestaltet.

**Fig. 5b** bis **5e** zeigt schematische Skizzen eines Hohlleiterrohrs 20 gemäß weiteren Ausführungsformen. Dabei weist **Fig. 5b** einen runden inneren Hohlraum 24 und eine runde Außenwand 29 auf. **Fig. 5c** weist einen rechteckigen inneren Hohlraum 24 und eine runde Außenwand 29 auf. **Fig. 5d** weist einen elliptischen inneren Hohlraum 24 und eine runde Außenwand 29 auf und entspricht etwa dem Hohlleiterrohr 20 von **Fig. 5a. Fig. 5e** weist einen runden inneren Hohlraum 24 auf und weist, als Abwandlung einer rechteckigen Außenwand, eine vieleckige Außenwand 29 auf.

**Fig. 6** zeigt ein Flussdiagramm 50 eines Verfahrens gemäß einer Ausführungsform. Dabei wird in einem Schritt 51 ein Mantel 30 bereitgestellt. Der Mantel 30 weist eine Innenwand 31 zur Aufnahme eines Hohlleiterrohrs 20 auf. Das Bereitstellen des Mantels kann beispielsweise eine nahtlose Fertigung, ein Bohren, ein Fräsen, eine sonstige abtragende Bearbeitung, ein Beschichten und/oder ein Vergüten beinhalten. Es ist auch möglich, den Mantel nur an den Enden so genau zu bearbeiten, so dass er dazu geeignet ist, das Hohlleiterrohr einzufügen. In einem Schritt 52 wird das Hohlleiterrohr 20 in dem Mantel 30 angeordnet. Das Anordnen des Hohlleiterrohrs 20 in dem Mantel 30 kann z.B. mittels Kleben, Pressen, Schrumpfen, Löten, Schweißen, Klemmen und/oder weiterer Methoden durchgeführt werden.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Liste der Bezugszeichen

- 10: Hohlleiteranordnung
- 20: Hohlleiterrohr
- 20a, 20b: erstes bzw. zweites Hohlleiterrohr
- 21: Innenwand des Hohlleiterrohrs
- 22a, 22b: erstes bzw. zweites Ende des Hohlleiterrohrs
- 24: innerer Hohlraum des Hohlleiterrohrs
- 25: Fügestelle des Hohlleiterrohrs
- 29: Außenwand des Hohlleiterrohrs
- 30: Mantel
- 31: Innenwand des Mantels
- 32: Endebereich des Mantels
- 33: Aufweitung
- 36: Ring, Befestigungselement
- 37: Schlitz
- 39: Außenwand des Mantels
- 40: Messgerät
- 41: Hohlraum
- 42: Generator (mit Elektronik)
- 43: Temperaturentkopplung
- 44: Antennensystem
- 46: Behälter
- 47: Füllgut
- 48: Füllgutoberfläche
- 50: Flussdiagramm
- 51, 52: Schritt

## Patentansprüche

1. Hohlleiteranordnung (10) zur thermischen Trennung eines Generators (42), der zur Erzeugung von hochfrequenten Messsignalen im Mikrowellen-Bereich eingerichtet ist, von einem Antennensystem (44),
wobei das Antennensystem (44) für eine höhere Temperatur spezifiziert ist als der Generator (42), und wobei das Antennensystem (44) mit dem Generator (42) mittels eines Hohlleiterrohrs (20) zur Übertragung der hochfrequenten Messsignale verbunden ist,
die Hohlleiteranordnung (10) aufweisend:
einen Mantel (30), dessen Innenwand (31) mit der Form der Außenwand (29) des Hohlleiterrohrs (20) zumindest abschnittsweise korrespondiert und der das Hohlleiterrohr (20) zumindest abschnittsweise aufnimmt,
wobei der Mantel (30) einen ähnlichen thermischen Ausdehnungskoeffizienten wie das Hohlleiterrohr (20) aufweist,
wobei die Innenseite (31) des Mantels (30) im Bereich eines Endes (32) des Mantels (30) eine Aufweitung (33), insbesondere eine konische Aufweitung (33), aufweist, welche zum Einpressen und Fixieren des Hohlleiterrohrs (20) bei der Montage der Hohlleiteranordnung (10) eingerichtet ist.

2. Hohlleiteranordnung (10) nach Anspruch 1,
wobei das Hohlleiterrohr (20) in dem Mantel (30) mittels eines konischen, insbesondere geschlitzten, Rings (36) fixiert ist, wobei der Ring (36) im Bereich der Aufweitung (33) angeordnet ist.

3. Hohlleiteranordnung (10) nach Anspruch 1 oder 2,
wobei der Mantel (30) mit einer Temperaturentkopplung (43) umgeben ist, welche Kühlrippen aufweist.

4. Hohlleiteranordnung (10) nach Anspruch 1 oder 2,
wobei der Mantel (30) eine Temperaturentkopplung (43) aufweist, welche von dem Hohlleiterrohr (20) mittels eines Hohlraums (41) beabstandet ist.

5. Hohlleiteranordnung (10) nach Anspruch 4,
wobei der Hohlraum (41) mit Luft und/oder einem anderen Fluid, insbesondere mit einem Schutzgas oder Transformatorenöl, gefüllt ist.

6. Hohlleiteranordnung (10) nach einem der vorhergehenden Ansprüche,
wobei sich die Ausdehnungskoeffizienten des Mantels (30) und des Hohlleiterrohrs (20) insbesondere um weniger als 3 %, beispielsweise um weniger als 1,5 %, unterscheiden.

7. Hohlleiteranordnung (10) nach einem der vorhergehenden Ansprüche,
wobei sich das Material des Mantels (30) von dem Material des Hohlleiterrohrs (20) unterscheidet, und/oder
wobei Materialien des Mantels (30) und des Hohlleiterrohrs (20) verträglich sind, insbesondere verträglich in Bezug auf deren Position in der sog. elektrochemischen Spannungsreihe beziehen, auf deren thermischen Ausdehnungskoeffizienten.

8. Hohlleiteranordnung (10) nach einem der vorhergehenden Ansprüche,
wobei das Hohlleiterrohr (20) Kupfer, eine Kupferlegierung, Messing, Silber und/oder Gold aufweist oder aus zumindest einem dieser Materialien besteht, und/oder
der Mantel (30) Stahl, Edelstahl, Keramik, Kunststoff oder Kunststoff mit Kohlefaser aufweist oder aus zumindest einem dieser Materialien besteht.

9. Hohlleiteranordnung (10) nach einem der vorhergehenden Ansprüche,
wobei die Innenseite (31) des Mantels (30) und/oder die Außenwand (29) des Hohlleiterrohrs (20) beschichtet und/oder vergütet ist.

10. Verfahren zur Herstellung einer Hohlleiteranordnung (10) nach einem der vorhergehenden Ansprüche, zur thermischen Trennung eines Generators (42) von einem Antennensystem (44), wobei das Antennensystem (44) für eine höhere Temperatur spezifiziert ist als der Generator (42), und wobei das Antennensystem (44) mit dem Generator (42) mittels eines Hohlleiterrohrs (20) zur Übertragung der hochfrequenten Messsignale verbunden ist, das Verfahren mit folgenden Schritten:
- Bereitstellen eines Mantels (30), welcher eine Innenwand (31) zur Aufnahme des Hohlleiterrohrs (20) aufweist,
wobei der Mantel (30) mit der Form der Außenwand (29) des Hohlleiterrohrs (20) zumindest abschnittsweise korrespondiert und der das Hohlleiterrohr (20) zumindest abschnittsweise aufnimmt, wobei der Mantel (30) einen ähnlichen thermischen Ausdehnungskoeffizienten wie das Hohlleiterrohr (20) aufweist, und
wobei die Innenseite (31) des Mantels (30) im Bereich eines Endes (32) des Mantels (30) eine Aufweitung (33), insbesondere eine konische Aufweitung (33), aufweist, welche zum Einpressen und Fixieren des Hohlleiterrohrs (20) bei der Montage der Hohlleiteranordnung (10) eingerichtet ist; und
- Anordnen des Hohlleiterrohrs (20) in dem Mantel (30), mittels einer der folgenden Methoden: Kleben, Pressen, Schrumpfen, Löten, Schweißen, Klemmen und/oder Schrauben.

11. Verfahren nach Anspruch 10, mit dem weiteren Schritt:
- Anordnen eines konischen, insbesondere geschlitzten, Rings (36) zwischen dem Mantel (30) und dem Hohlleiterrohr (20) im Bereich der Aufweitung (33).

12. Verfahren nach Anspruch 10 oder 11,
wobei der Mantel (30) mit einer Temperaturentkopplung (43) umgeben ist, welche Kühlrippen aufweist.

13. Verfahren nach Anspruch 10 oder 11,
wobei der Mantel (30) eine Temperaturentkopplung (43) aufweist, welche von dem Hohlleiterrohr (20) mittels eines Hohlraums (41) beabstandet ist.

14. Messgerät (40) zur Füllstandmessung oder zur Grenzstandbestimmung, aufweisend:
- einen Generator (42), der zur Erzeugung von hochfrequenten Messsignalen im Mikrowellen-Bereich eingerichtet ist,
- ein Antennensystem (44), das zum Abstrahlen der hochfrequenten Messsignale eingerichtet ist, und
- eine Hohlleiteranordnung (10) nach einem der Ansprüche 1 bis 9, eingerichtet zum Übertragen der Messsignale von dem Generator (42) zu dem Antennensystem (44).

15. Verwendung einer Hohlleiteranordnung (10) nach einem der Ansprüche 1 bis 9, oder eines Verfahrens nach einem der Ansprüche 10 bis 12, zur Übertragung von Mikrowellen zum Messen eines Grenzstands oder eines Füllstands, und/oder
zur Übertragung von Mikrowellen in einem Frequenzbereich zwischen 1 GHz und 300 GHz, beispielsweise zwischen 30 und 100 GHz.

## Claims

1. A waveguide arrangement (10) for thermally separating a generator (42), which is configured for generating high-frequency measurement signals in the microwave range, from an antenna system (44),
wherein the antenna system (44) is specified for a higher temperature than the generator (42), and wherein the antenna system (44) is connected to the generator (42) by means of a waveguide tube (20) for the transmission of the high-frequency measurement signals,
the waveguide arrangement (10) comprising:
a sheath (30), whose inner wall (31) corresponds at least in sections to a shape of the outer wall (29) of the waveguide tube (20) and which accommodates the waveguide tube (20) at least in sections,
wherein the sheath (30) has a similar coefficient of thermal expansion as the waveguide tube (20),
wherein the inner side (31) of the sheath (30) has an expansion (33), in particular a conical expansion (33), in the region of one end (32) of the sheath (30), which is designed for pressing in and fixing the waveguide tube (20) during assembly of the waveguide arrangement (10).

2. The waveguide arrangement (10) according to claim 1,
wherein the waveguide tube (20) is fixed in the sheath (30) by means of a conical, in particular slotted, ring (36), wherein the ring (36) is arranged in the region of the expansion (33).

3. The waveguide arrangement (10) according to claim 1 or 2,
wherein the sheath (30) is surrounded by a temperature decoupling (43) which has cooling fins.

4. The waveguide arrangement (10) according to claim 1 or 2,
wherein the sheath (30) has a temperature decoupling (43) which is spaced from the waveguide tube (20) by means of a cavity (41).

5. The waveguide arrangement (10) according to claim 4,
wherein the cavity (41) is filled with air and/or another fluid, in particular with a shielding gas or transformer oil.

6. The waveguide arrangement (10) according to one of the preceding claims,
wherein the expansion coefficients of the sheath (30) and the waveguide tube (20) differ in particular by less than 3 %, for example by less than 1.5 %.

7. The waveguide arrangement (10) according to one of the preceding claims,
wherein the material of the sheath (30) differs from the material of the waveguide tube (20), and/or
wherein materials of the sheath (30) and the waveguide tube (20) are compatible, in particular compatible with respect to their position in the so-called electrochemical voltage series, with respect to their thermal expansion coefficients.

8. The waveguide arrangement (10) according to one of the preceding claims,
wherein the waveguide tube (20) comprises copper, a copper alloy, brass, silver and/or gold or consists of at least one of these materials, and/or
the sheath (30) comprises steel, stainless steel, ceramic, plastic or plastic with carbon fibre or consists of at least one of these materials.

9. The waveguide arrangement (10) according to one of the preceding claims,
wherein the inner side (31) of the sheath (30) and/or the outer wall (29) of the waveguide tube (20) is coated and/or tempered.

10. A method for manufacturing a waveguide arrangement (10) according to one of the preceding claims, for thermally separating a generator (42) from an antenna system (44), wherein the antenna system (44) is specified for a higher temperature than the generator (42), and wherein the antenna system (44) is connected to the generator (42) by means of a waveguide tube (20) for transmitting the high-frequency measurement signals, the method comprising the following steps:
- providing a sheath (30) which has an inner wall (31) for receiving the waveguide tube (20),
wherein the sheath (30) corresponds to the shape of the outer wall (29) of the waveguide tube (20) at least in sections and accommodates the waveguide tube (20) at least in sections, wherein the sheath (30) has a similar coefficient of thermal expansion as the waveguide tube (20), and
wherein the inner side (31) of the sheath (30) has an expansion (33), in particular a conical expansion (33), in the region of one end (32) of the sheath (30), which is designed for pressing in and fixing the waveguide tube (20) during assembly of the waveguide arrangement (10); and
- arranging the waveguide tube (20) in the sheath (30) by means of one of the following methods: gluing, pressing, shrinking, soldering, welding, clamping and/or screwing.

11. The method according to claim 10, with the further step:
- arranging a conical, in particular slotted, ring (36) between the sheath (30) and the waveguide tube (20) in the region of the expansion (33).

12. The method according to claim 10 or 11,
wherein the sheath (30) is surrounded by a temperature decoupling (43) which has cooling fins.

13. The method according to claim 10 or 11,
wherein the sheath (30) has a temperature decoupling (43) which is spaced from the waveguide tube (20) by means of a cavity (41).

14. A measuring device (40) for fill level measurement or level limit determination, comprising:
- a generator (42) configured for generating high-frequency measurement signals in the microwave range,
- an antenna system (44) configured for radiating the high-frequency measurement signals, and
- a waveguide arrangement (10) according to any one of claims 1 to 9, configured for transmitting the measurement signals from the generator (42) to the antenna system (44).

15. Use of a waveguide arrangement (10) according to one of claims 1 to 9, or of a method according to one of claims 10 to 12, for transmitting microwaves for measuring a limit level or a filling level, and/or
for the transmission of microwaves in a frequency range between 1 GHz and 300 GHz, for example between 30 and 100 GHz.

## Revendications

1. Ensemble guide d'ondes (10) pour la séparation thermique d'un générateur (42), qui est conçu pour générer des signaux de mesure à haute fréquence dans le domaine des micro-ondes, d'un système d'antenne (44),
dans lequel le système d'antenne (44) est spécifié pour une température supérieure à celle du générateur (42), et le système d'antenne (44) est relié au générateur (42) au moyen d'un tube guide d'ondes (20) pour la transmission des signaux de mesure à haute fréquence,
l'ensemble guide d'ondes (10) présentant :
une gaine (30) dont la paroi intérieure (31) correspond au moins sur certaines parties à la forme de la paroi extérieure (29) du tube guide d'ondes (20) et qui reçoit le tube guide d'ondes (20) au moins sur certaines parties, dans lequel la gaine (30) présente un coefficient de dilatation thermique similaire à celui du tube guide d'ondes (20),
dans lequel la face intérieure (31) de la gaine (30) présente, dans la zone d'une extrémité (32) de la gaine (30), un élargissement (33), en particulier un élargissement conique (33), qui est conçu pour l'enfoncement et la fixation du tube guide d'ondes (20) lors du montage de l'ensemble guide d'ondes (10).

2. Ensemble guide d'ondes (10) selon la revendication 1,
dans lequel le tube guide d'ondes (20) est fixé dans la gaine (30) au moyen d'une bague conique (36), en particulier fendue, la bague (36) étant disposée dans la zone de l'élargissement (33).

3. Ensemble guide d'ondes (10) selon la revendication 1 ou 2, dans lequel la gaine (30) est entourée d'un découplage thermique (43) qui présente des ailettes de refroidissement.

4. Ensemble guide d'ondes (10) selon la revendication 1 ou 2, dans lequel la gaine (30) présente un découplage thermique (43) qui est espacé du tube guide d'ondes (20) au moyen d'un espace creux (41).

5. Ensemble guide d'ondes (10) selon la revendication 4,
dans lequel l'espace creux (41) est rempli d'air et/ou d'un autre fluide, en particulier d'un gaz de protection ou d'huile de transformateur.

6. Ensemble guide d'ondes (10) selon l'une des revendications précédentes, dans lequel les coefficients de dilatation de la gaine (30) et du tube guide d'ondes (20) diffèrent en particulier de moins de 3 %, par exemple de moins de 1,5 %.

7. Ensemble guide d'ondes (10) selon l'une des revendications précédentes,
dans lequel le matériau de la gaine (30) diffère du matériau du tube guide d'ondes (20), et/ou
dans lequel les matériaux de la gaine (30) et du tube guide d'ondes (20) sont compatibles, en particulier compatibles en ce qui concerne leur position dans la série des tensions électrochimiques, en ce qui concerne leur coefficient de dilatation thermique.

8. Ensemble guide d'ondes (10) selon l'une des revendications précédentes,
dans lequel le tube guide d'ondes (20) présente du cuivre, un alliage de cuivre, du laiton, de l'argent et/ou de l'or ou est constitué d'au moins un de ces matériaux, et/ou
la gaine (30) présente de l'acier, de l'acier inoxydable, de la céramique, du plastique ou du plastique avec des fibres de carbone ou est constituée d'au moins un de ces matériaux.

9. Ensemble guide d'ondes (10) selon l'une des revendications précédentes,
dans lequel la face intérieure (31) de la gaine (30) et/ou la paroi extérieure (29) du tube guide d'ondes (20) sont revêtues et/ou traitées.

10. Procédé de fabrication d'un ensemble guide d'ondes (10) selon l'une des revendications précédentes, pour la séparation thermique d'un générateur (42) d'un système d'antenne (44), dans lequel le système d'antenne (44) est spécifié pour une température supérieure à celle du générateur (42), et dans lequel le système d'antenne (44) est relié au générateur (42) au moyen d'un tube guide d'ondes (20) pour la transmission des signaux de mesure à haute fréquence, le procédé comprenant les étapes consistant à :
- mettre à disposition une gaine (30) qui présente une paroi intérieure (31) destinée à recevoir le tube guide d'ondes (20),
dans lequel la gaine (30) correspond au moins sur certaines parties à la forme de la paroi extérieure (29) du tube guide d'ondes (20) et reçoit le tube guide d'ondes (20) au moins sur certaines parties, dans lequel la gaine (30) présente un coefficient de dilatation thermique similaire à celui du tube guide d'ondes (20), et
dans lequel la face intérieure (31) de la gaine (30) présente, dans la zone d'une extrémité (32) de la gaine (30), un élargissement (33), en particulier un élargissement conique (33), qui est conçu pour l'enfoncement et la fixation du tube guide d'ondes (20) lors du montage de l'ensemble guide d'ondes (10) ; et
- disposer le tube guide d'ondes (20) dans la gaine (30), par l'une des méthodes suivantes : collage, pressage, rétraction, brasage, soudage, serrage et/ou vissage.

11. Procédé selon la revendication 10, comprenant l'étape supplémentaire consistant à :
- disposer une bague conique (36), en particulier fendue, entre la gaine (30) et le tube guide d'ondes (20) dans la zone de l'élargissement (33).

12. Procédé selon la revendication 10 ou 11,
dans lequel la gaine (30) est entourée d'un découplage thermique (43) qui présente des ailettes de refroidissement.

13. Procédé selon la revendication 10 ou 11,
dans lequel la gaine (30) présente un découplage thermique (43) qui est espacé du tube guide d'ondes (20) au moyen d'un espace creux (41).

14. Appareil de mesure (40) pour la mesure de niveau de remplissage ou la détermination de niveau limite, présentant :
- un générateur (42) qui est conçu pour générer des signaux de mesure à haute fréquence dans le domaine des micro-ondes,
- un système d'antenne (44) qui est conçu pour émettre les signaux de mesure à haute fréquence, et
- un ensemble guide d'ondes (10) selon l'une des revendications 1 à 9, conçu pour transmettre les signaux de mesure du générateur (42) au système d'antenne (44).

15. Utilisation d'un ensemble guide d'ondes (10) selon l'une des revendications 1 à 9, ou d'un procédé selon l'une des revendications 10 à 12, pour la transmission de micro-ondes pour mesurer un niveau limite ou un niveau de remplissage, et/ou
pour la transmission de micro-ondes dans une gamme de fréquences comprise entre 1 GHz et 300 GHz, par exemple entre 30 et 100 GHz.
